# EUROPÄISCHE PATENTSCHRIFT

(11) **EP 4 339 556 B1**
(45) Veröffentlichungstag und Bekanntmachung des Hinweises auf die Patenterteilung: **27.11.2024**
(21) Anmeldenummer: 22196044.6
(22) Anmeldetag: 16.09.2022
(51) Int. Cl.: G01B 11/30, G01B 11/25

(54) **VERFAHREN UND VORRICHTUNG ZUM BESTIMMEN VON OBERFLÄCHENEIGENSCHAFTEN EINES WERKSTÜCKS**
METHOD AND DEVICE FOR DETERMINING THE SURFACE PROPERTIES OF A WORKPIECE
PROCÉDÉ ET DISPOSITIF DE DÉTERMINATION DE PROPRIÉTÉS DE SURFACE D'UNE PIÈCE

(43) Veröffentlichungstag der Anmeldung: 20.03.2024
(73) Patentinhaber: Carl Zeiss Industrielle Messtechnik GmbH, 73447 Oberkochen (DE)
(72) Erfinder: Mansel, Henning, 73432 Aalen (DE); Kohler, Manuel, 73450 Neresheim (DE); Seewig, Jörg, 30539 Hannover (DE); Imkamp, Karl Dietrich, 74523 Schwäbisch Hall (DE)
(74) Vertreter: Witte, Weller & Partner Patentanwälte mbB

(56) Entgegenhaltungen:
- CN-A- 113 070 644
- JIANG JIANKAI ET AL: "Novel tool offset fly cutting straight-groove-type micro structure arrays", JOURNAL OF MATERIALS PROCESSING TECHNOLOGY, ELSEVIER, NL, vol. 288, 12 September 2020 (2020-09-12), XP086321797, ISSN: 0924-0136, [retrieved on 20200912], DOI: 10.1016/J.JMATPROTEC.2020.116900
- JASINEVICIUS RENATO G ET AL: "Size effects in ultraprecision machining of aluminum alloys: Conventional AA6061-T6 and RSA 6061-T6", JOURNAL OF MANUFACTURING PROCESSES, SOCIETY OF MANUFACTURING ENGINEERS, DEARBORN, MI, US, vol. 68, 22 July 2021 (2021-07-22), pages 136 - 157, XP086712185, ISSN: 1526-6125, [retrieved on 20210722], DOI: 10.1016/J.JMAPRO.2021.07.027

## Beschreibung

Die vorliegende Erfindung betrifft ein Verfahren und eine Vorrichtung zum Bestimmen von Oberflächeneigenschaften eines Werkstücks mit einer Werkstückoberfläche, die mit einem definierten Bearbeitungswerkzeug bearbeitet worden ist und als Folge davon eine Vielzahl von individuellen Bearbeitungsspuren aufweist.

Es gibt zahlreiche Bearbeitungsverfahren, mit denen Werkstücke in industriellen Produktionsumgebungen hergestellt und bearbeitet werden können. Insbesondere werden viele Werkstücke in industriellen Produktionsumgebungen durch spanende Bearbeitung aus einem Werkstückrohling hergestellt. Die spanende Bearbeitung kann insbesondere Drehen, Fräsen, Bohren, Schleifen u.a. beinhalten. Darüber hinaus gibt es seit einigen Jahren additive Herstellungsverfahren, bei denen ein Werkstück durch Aufbringen von jeweils neuen Materialschichten schichtweise hergestellt wird. All diese Herstellungsverfahren und Bearbeitungen hinterlassen eine Werkstückoberfläche, die individuelle Bearbeitungsspuren aufweist. In manchen Fällen können Bearbeitungsspuren aus ästhetischen und/oder technischen Gründen unerwünscht sein und eine gezielte Nachbearbeitung erfordern. In anderen Fällen können Bearbeitungsspuren gezielt genutzt werden, um eine bestimmte ästhetische und/oder technische Wirkung zu erzielen.

Bei der Fertigung von Antriebssträngen im Automobilbau wird beispielsweise besonderes Augenmerk auf die Dichtigkeit von Flanschverbindungen zwischen Antriebsstrangkomponenten gelegt, wie z.B. Flanschverbindungen zwischen Motor- und Getriebegehäusen. Der Austritt von Schmiermittel und das Eindringen von Spritzwasser (Spaltkorrosion) sollen verhindert werden. Als Dichtmittel werden häufig Elastomer- und/oder Flüssigdichtmittel verwendet. Die Haftung dieser Dichtmittel auf der Flanschoberfläche kann verbessert werden, wenn die Flanschoberfläche eine "besonders raue" Struktur aufweist. Daher wird die Werkstückoberfläche von derartigen Flanschverbindungen in einigen Fällen gezielt bearbeitet, um eine spezifische Mikrostruktur zu erzeugen. Beispielsweise kann die Oberfläche in einem Stirnfräsprozess spanend bearbeitet werden, wobei durch die Schneiden des Stirnfräsers gezielt Riefen in die Oberfläche eingebracht werden. Die Riefen bilden eine Mikrostrukturierung der Dichtungsflächen, die bei entsprechender Vergrößerung beispielsweise einer Waffeleisenstruktur ähneln kann. Eine Waffeleisenstruktur besitzt typischerweise eine Vielzahl von sich kreuzenden Gräben/Tälern, zwischen denen regelmäßige Erhebungen verbleiben.

Eine gezielt durch Oberflächenbearbeitung eingebrachte Mikrostrukturierung einer Werkstückoberfläche hat Einfluss auf die technischen und/oder ästhetischen Eigenschaften des Werkstücks. Bei den oben genannten Flanschflächen werden die Bearbeitungsspuren bzw. die dadurch erzeugte Mikrostrukturierung daher vom Fahrzeughersteller in einigen Fällen geometrisch toleriert, d.h. die Mikrostrukturierung muss definierte geometrische Kriterien einhalten. Es ist daher wünschenswert, die geometrischen Eigenschaften einer solchen Werkstückoberfläche im Rahmen einer fertigungsbegleitenden Qualitätskontrolle zu prüfen.

Es gibt zahlreiche Technologien und Messverfahren, um die geometrischen Eigenschaften von Werkstücken und insbesondere von Werkstückoberflächen zu bestimmen. In der industriellen Messtechnik unterscheidet man häufig zwischen der Form, der Welligkeit und der Rauheit einer Werkstückoberfläche, wobei typischerweise für jede dieser drei Oberflächeneigenschaften eine spezielle Messtechnik eingesetzt wird. Bearbeitungsspuren an der Oberfläche eines Werkstücks werden typischerweise mit Methoden der Rauheitsmessung analysiert. Dabei kommen häufig sogenannte Tastschnittverfahren zum Einsatz. Bei diesen Tastschnittverfahren wird häufig die sehr feine Tastspitze eines sogenannten Profilometers über die Werkstückoberfläche gezogen und die vertikalen Auslenkungen der Tastspitze werden erfasst. Daneben gibt es berührungslos arbeitende Profilometer, bei denen die Rauheit der Werkstückoberfläche mit einem optischen Punktsensor entlang einer Messbahn erfasst wird.

EP 0 732 563 A1 offenbart ein Verfahren zur Rauheitsmessung mit einem Koordinatenmessgerät, wobei anstelle des regelmäßig für Koordinatenmessungen verwendeten Taststifts mit Tastkugel ein passiver Rauheitstaster mit einer Tastspitze an den messenden Tastkopf des Koordinatenmessgerätes eingewechselt. Die Generierung der Messpunkte erfolgt unter Benutzung der vorhandenen Messwertgeber im Tastkopf des Koordinatenmessgerätes. Aus der quasianalogen Messpunktfolge werden mit Hilfe eines entsprechenden Softwaremoduls die gewünschten Oberflächenkenngrößen berechnet.

EP 3 435 032 A1 offenbart einen optischen Rauheitssensor für eine Koordinatenmessmaschine.

DE 10 2017 105 814 B3 offenbart ein System zum Messen der Rauheit einer Werkstückoberfläche, wobei wahlweise ein taktiler oder berührungslos arbeitender Kufen-Rauheitstaster und ein taktiler oder berührungslos arbeitender kufenloser Frei-Rauheitstaster verwendet werden können.

Der Artikel "Novel tool offset fly cutting straight-groove-type micro structure arrays" von Jiankai Jiang *et al.* offenbart ein Verfahren zum Herstellen und Vermessen von Werkstückoberflächen mit waffeleisenartigen Mikrostrukturen. Der Abstand zwischen Gipfeln der Mikrostruktur wird aus 3D-Messdaten bestimmt.

Prinzipiell ist es möglich, die Werkstückoberfläche mit den Bearbeitungsspuren entlang von einer oder mehreren Messbahnen mit einem Rauheitstaster abzutasten und die Einhaltung der vom Hersteller geforderten Toleranzen der Werkstückoberfläche anhand einer Auswertung der so erhaltenen Messdaten zu prüfen. Wenn die Prüfung nicht nur entlang von einer Profilbahn, sondern auch in der Fläche erfolgen soll, wie es beispielsweise bei der Prüfung von Flanschdichtflächen wünschenswert ist, dauert die Messwertaufnahme und Auswertung mit bekannten Verfahren sehr lang. Eine Verkürzung der Messzeit ist prinzipiell möglich, wenn man den Abstand der Messpunkte voneinander vergrößert, aber dies geht zu Lasten der Messauflösung.

Vor diesem Hintergrund ist es eine Aufgabe der vorliegenden Erfindung, ein Verfahren und eine Vorrichtung anzugeben, die das Bestimmen von Oberflächeneigenschaften eines Werkstücks mit einer Vielzahl von individuellen Bearbeitungsspuren eines Bearbeitungswerkzeugs auf effiziente Weise ermöglichen. Es ist insbesondere eine Aufgabe, ein Verfahren und eine Vorrichtung anzugeben, mit denen die mikrostrukturierte Oberfläche einer Flanschverbindung schnell und mit einer zur Beurteilung von Hafteigenschaften benötigten Genauigkeit und/oder Flächenauflösung gemessen werden kann. Es ist eine weitere Aufgabe, ein Verfahren und eine Vorrichtung anzugeben, mit denen eine anwendungsspezifische oder kundenspezifische Tolerierung einer bearbeiteten Werkstückoberfläche geprüft werden kann.

Gemäß einem Aspekt der vorliegenden Erfindung wird zur Lösung dieser Aufgaben ein Verfahren vorgeschlagen zum Bestimmen von Oberflächeneigenschaften eines Werkstücks mit einer Werkstückoberfläche, die mit einem definierten Bearbeitungswerkzeug bearbeitet worden ist und als Folge davon eine Vielzahl von individuellen Bearbeitungsspuren aufweist, wobei das Verfahren folgende Schritte aufweist:
- Erfassen eines ersten 3D-Datensatzes von einem definierten Oberflächenabschnitt der Werkstückoberfläche,
- Erhalten einer Modellspur, die eine theoretische Bearbeitungsspur des Bearbeitungswerkzeugs repräsentiert,
- Erstes Einpassen der Modellspur in den ersten 3D-Datensatz, so dass die Modellspur ersten 3D-Daten aus dem ersten 3D-Datensatz angenähert ist, wobei die ersten 3D-Daten eine erste individuelle Bearbeitungsspur aus der Vielzahl von individuellen Bearbeitungsspuren repräsentieren,

- Weiteres Einpassen der Modellspur in den ersten 3D-Datensatz, so dass die Modellspur weiteren 3D-Daten aus dem ersten 3D-Datensatz angenähert ist, wobei die weiteren 3D-Daten eine weitere individuelle Bearbeitungsspur aus der Vielzahl von individuellen Bearbeitungsspuren repräsentieren,
- Bestimmen von zumindest einer Kenngröße, die ein Verhältnis zwischen den ersten 3D-Daten und den weiteren 3D-Daten repräsentiert.

Gemäß einem weiteren Aspekt wird eine Vorrichtung vorgeschlagen zum Bestimmen von Oberflächeneigenschaften eines Werkstücks mit einer Werkstückoberfläche, die mit einem definierten Bearbeitungswerkzeug bearbeitet worden ist, wobei die Werkstückoberfläche eine Vielzahl von individuellen Bearbeitungsspuren aufweist, die von dem Bearbeitungswerkzeug resultieren, mit einem ersten 3D- Messkopf, das dazu eingerichtet ist, einen ersten 3D-Datensatz von einem definierten Oberflächenabschnitt der Werkstückoberfläche zu erfassen, und mit einem Auswertegerät, das dazu eingerichtet ist,
- eine Modellspur zu erhalten, die eine theoretische Bearbeitungsspur des Bearbeitungswerkzeugs repräsentiert,
- die Modellspur in den ersten 3D-Datensatz einzupassen, so dass die Modellspur ersten 3D-Daten aus dem ersten 3D-Datensatz angenähert ist, wobei die ersten 3D-Daten eine erste individuelle Bearbeitungsspur aus der Vielzahl von individuellen Bearbeitungsspuren repräsentieren,
- die Modellspur ein weiteres Mal in den ersten 3D-Datensatz einzupassen, so dass die Modellspur weiteren 3D-Daten aus dem ersten 3D-Datensatz angenähert ist, wobei die weiteren 3D-Daten eine weitere individuelle Bearbeitungsspur aus der Vielzahl von individuellen Bearbeitungsspuren repräsentieren, und
- zumindest eine Kenngröße zu bestimmen, die ein Verhältnis zwischen den ersten 3D-Daten und den weiteren 3D-Daten repräsentiert.

Das neue Verfahren und die neue Vorrichtung bestimmen zumindest eine Kenngröße, die ein Verhältnis zwischen den ersten 3D-Daten und den weiteren 3D-Daten repräsentiert. Damit repräsentiert die zumindest eine Kenngröße zugleich ein Verhältnis zwischen der ersten individuellen Bearbeitungsspur und der weiteren individuelle Bearbeitungsspur aus der Vielzahl von individuellen Bearbeitungsspuren. Das Verhältnis kann insbesondere einen Abstand zwischen der ersten Bearbeitungsspur und der weiteren Bearbeitungsspur angeben und/oder einen Winkel, unter dem sich die Bearbeitungsspuren schneiden und/oder eine Tiefendifferenz zwischen der ersten Bearbeitungsspur und der weiteren Bearbeitungsspur. Die zumindest eine Kenngröße ist damit charakteristisch für das entsprechende Verhältnis zwischen der ersten individuellen Bearbeitungsspur und der weiteren individuellen Bearbeitungsspur und sie ist infolgedessen auch charakteristisch für die individuellen Eigenschaften der Werkstückoberfläche als Folge der Bearbeitung mit dem definierten Bearbeitungswerkzeug.

Das neue Verfahren und die neue Vorrichtung verwenden jeweils eine Modellspur, die eine theoretische Bearbeitungsspur des Bearbeitungswerkzeugs repräsentiert. Die theoretische Bearbeitungsspur ist eine Soll-Bearbeitungsspur bzw. eine zu erwartende Bearbeitungsspur, die angesichts des für die Oberflächenbearbeitung verwendeten Bearbeitungswerkezugs erwartet werden kann. Die Modellspur modelliert daher das verwendete Bearbeitungswerkzeug. Das neue Verfahren und die neue Vorrichtung verwenden auf diese Weise a priori-Wissen in Bezug auf die Werkstückbearbeitung, um den (ersten) 3D-Datensatz schnell und effizient auszuwerten. In bevorzugten Ausführungsbeispielen, auf die weiter unten eingegangen wird, können im Verlauf des Verfahrens ein oder mehrere weitere Datensätze (2D und/oder 3D) erfasst und ausgewertet werden, weshalb der 3D-Datensatz hier als erster 3D-Datensatz bezeichnet ist. Prinzipiell erlauben das neue Verfahren und die Vorrichtung schon mit dem ersten 3D-Datensatz eine effiziente Qualitätskontrolle.

Der erste 3D-Datensatz beschreibt eine Punktewolke, die die Topografie der Werkstückoberfläche repräsentiert. Durch das Einpassen der vorbekannten Modellspur in diese Punktewolke derart, dass die Modellspur den (ersten) 3D-Daten angenähert ist, wird die erste individuelle Bearbeitungsspur in dem 3D-Datensatz identifiziert. Das Einpassen kann mit jedem bekannten Best-Fit-Verfahren erfolgen, beispielsweise mit der Methode der (Minimierung der) kleinsten Abweichungsquadrate. Mit Hilfe der Einpassung der Modellspur in den 3D-Datensatz kann die erste "reale" Bearbeitungsspur auf der Werkstückoberfläche in dem 3D-Datensatz sehr schnell und genau bestimmt werden. Ebenso kann durch Einpassen derselben Modellspur an anderer Stelle des 3D-Datensatzes eine weitere individuelle Bearbeitungsspur identifiziert werden. Die Bestimmung mehrerer individueller Bearbeitungsspuren in dem 3D-Datensatz unter Verwendung von einer (im Sinne der Zahl 1) vordefinierten Modellspur entspricht der Erzeugung der Vielzahl von Bearbeitungsspuren mit einem definierten Bearbeitungswerkzeug, beispielsweise einem Fräskopf. In gewisser Weise bildet die Identifikation der Bearbeitungsspuren die Erzeugung der Bearbeitungsspuren nach, weil die Modellspur das verwendete Bearbeitungswerkzeug modelliert. Beispielsweise kann die Modellspur in Abhängigkeit von der Form der Schneidkante eines spanenden Bearbeitungswerkzeugs oder in Abhängigkeit von dem Öffnungsquerschnitt eines additiven Schichtbildungswerkzeugs definiert sein.

Die Bestimmung der zumindest einen Kenngröße unter Verwendung der 3D-Daten der auf diese Weise identifizierten Bearbeitungsspuren ermöglicht eine Charakterisierung der Werkstückoberfläche auf sehr effiziente Weise. Das Verfahren und die Vorrichtung eignen sich insbesondere zur Inspektion und Prüfung einer mikrostrukturierten Oberfläche, insbesondere einer waffeleisenartig strukturierten Oberfläche, zur Beurteilung von deren Hafteigenschaften für ein Dichtmittel. Das Verfahren und die Vorrichtung lassen sich zudem flexibel an Kundenanforderungen in Bezug auf die zu bestimmenden Kenngrößen anpassen, da die individuellen Bearbeitungsspuren in dem gemessenen 3D-Datensatz sehr genau identifiziert werden können. Die oben genannte Aufgabe ist daher vollständig gelöst.

In einer bevorzugten Ausgestaltung der Erfindung beinhaltet das weitere Einpassen der Modellspur in den ersten 3D-Datensatz eine Vielzahl von weiteren Einpassungsschritten, so dass die Modellspur einer Vielzahl von weiteren 3D-Daten aus dem ersten 3D-Datensatz angenähert wird.

Die Vielzahl von weiteren 3D-Daten dieser Ausgestaltung repräsentieren eine Vielzahl von weiteren individuellen Bearbeitungsspuren aus der Vielzahl von individuellen Bearbeitungsspuren. Mit anderen Worten bestimmen die neue Vorrichtung und das neue Verfahren in dieser Ausgestaltung mehr als nur zwei Bearbeitungsspuren in dem 3D-Datensatz unter Verwendung der Modellspur, die das Bearbeitungswerkzeug modelliert. Tatsächlich erzeugt das Bearbeitungswerkzeug zahlreiche reale Bearbeitungsspuren auf der Werkstückoberfläche. In dieser Ausgestaltung werden viele dieser Bearbeitungsspuren ausgewertet und zur Bestimmung der zumindest einen Kenngröße verwendet. Die Ausgestaltung vereinfacht daher eine schnelle und effiziente Beurteilung der Werkstückoberfläche "in der Fläche", d.h. an verschiedenen Stellen, die eine Ebene parallel zu der Werkstückoberfläche aufspannen.

In einer weiteren Ausgestaltung wird die Modellspur nach dem ersten Einpassen relativ zu den ersten 3D-Daten lateral verschoben, um die Modellspur den weiteren 3D-Daten aus dem ersten 3D-Datensatz anzunähern.

In dieser Ausgestaltung wird die Bewegung des Bearbeitungswerkzeugs relativ zu der Werkstückoberfläche nachgebildet, indem die Modellspur sequentiell den weiteren Bearbeitungsspuren angenähert wird. Die Ausgestaltung ermöglicht eine sehr genaue Identifikation und Bestimmung der Bearbeitungsspuren. Vorteilhaft kann mit dieser Ausgestaltung der Bewegungspfad des Bearbeitungswerkzeugs entlang der Werkstückoberfläche nachvollzogen werden. In einigen vorteilhaften Ausführungsbeispielen wird die jeweilige Bewegungsrichtung des Werkzeugs relativ zu der Werkstückoberfläche bestimmt. Mit Hilfe der jeweiligen Bewegungsrichtung können die Bearbeitungsspuren auf der Werkstückoberfläche noch genauer identifiziert werden.

In einer weiteren Ausgestaltung wird eine Vielzahl von Modellspuren, die eine Schar von gestaffelten Modellspuren bilden, in den ersten 3D-Datensatz eingepasst.

In dieser Ausgestaltung werden mehrere parallele und/oder gekreuzte Modellspuren zeitgleich in den ersten 3D-Datensatz eingepasst. Vorzugsweise sind die einzelnen Modellspuren aus der Schar von Modellspuren typgleich oder gar identisch zueinander. Die Ausgestaltung ermöglicht eine sehr schnelle Auswertung der Messdaten. Aufgrund der räumlichen Korrelation der Modellspuren in der Schar von Modellspuren ermöglicht diese Ausgestaltung außerdem eine sehr genaue Identifikation und Bestimmung der tatsächlichen Bearbeitungsspuren, weil die Vielzahl von Bearbeitungsspuren aufgrund ihrer Erzeugung mit einem Bearbeitungswerkzeug ebenfalls korreliert sind.

In einer weiteren Ausgestaltung ist die Modellspur weitgehend kreisbogenförmig, insbesondere zykloid.

Diese Ausgestaltung bildet die typische Rotationsbewegung eines spanenden Bearbeitungswerkzeugs nach und ermöglicht daher eine sehr schnelle und genaue Identifikation der Bearbeitungsspuren nach einer spanenden Bearbeitung. Besonders gut eignet sich diese Ausgestaltung zur Inspektion einer Werkstückoberfläche, die mit einem Stirnfräser bearbeitet wurde.

In einer weiteren Ausgestaltung wird die Modellspur unter Verwendung einer Rotationsfläche in den ersten 3D-Datensatz eingepasst. Vorzugsweise beinhaltet die Rotationsfläche eine Außenkontur in Form einer Parabel, wobei die Rotationsachse nicht mit der Symmetrieachse der Parabel übereinstimmt.

In dieser Ausgestaltung wird das Bearbeitungswerkzeug durch ein 3D-Modell repräsentiert, das eine drehende Schneide modelliert. Das 3D-Model wird in den 3D-Datensatz eingepasst und den erfassten Messdaten der individuellen Bearbeitungsspuren angenähert. Im Fall einer Rotationsfläche mit einer Außenkontur in Form einer Parabelrepräsentiert das 3D-Modell eine Schneide mit einer Schneidkante, was beispielsweise eine Fräsbearbeitung mit einem Stirnfräser sehr effizient nachbildet. Die reale Schneidkante des Fräswerkzeugs kann durchaus auch kreisförmig oder anders geformt sein. Eine Parabel nähert diese Schneidengeometrien an und ist numerisch sehr effizient einzupassen. Die Ausgestaltung ermöglicht durch die 3D-Einpassung eine noch genauere Identifikation der Bearbeitungsspuren.

In einer weiteren Ausgestaltung wird eine fiktive Rotationsachse des Bearbeitungswerkzeugs unter Verwendung der Modellspur und des ersten 3D-Datensatzes bestimmt.

In dieser Ausgestaltung kann die laterale Bewegung des Bearbeitungswerkzeugs aus den erfassten Messdaten sehr effizient bestimmt werden. Die Rotationsachse repräsentiert beispielsweise den Fräsmittelpunkt einer jeden Fräsbahn bei einer Fräsbearbeitung des Werkstücks. Die Ausgestaltung ermöglicht eine sehr genaue Annäherung der Modellspur an eine Vielzahl von realen Bearbeitungsspuren und trägt infolgedessen zu einer sehr detaillierten Inspektion der Oberfläche bei. Darüber hinaus ermöglicht diese Ausgestaltung eine sehr aussagekräftige und eindeutig bestimmte bzw. nachvollziehbare Kenngröße für den Winkel, in dem sich die gekreuzte Bearbeitungsspuren schneiden. Da der erfasste 3D-Datensatz in vorteilhaften Ausführungsbeispielen nur einen Ausschnitt aus der Werkstückoberfläche repräsentiert, beispielsweise einen Ausschnitt der Größe 5mm x 5mm, können sich die gekreuzten Bearbeitungsspuren aufgrund ihren annähernd Kreisbogenform an verschiedenen Betrachtungsstellen des Ausschnitts unter verschiedenen Winkeln schneiden. Die Ausgestaltung bietet eine einfache Möglichkeit, einen einzigen aussagekräftigen Winkel als Kenngröße für die Beurteilung der Werkstückoberfläche bereitzustellen.

In einer weiteren Ausgestaltung wird ein weiterer Datensatz entlang der ersten 3D-Daten und/oder entlang der weiteren 3D-Daten erfasst, wobei eine weitere Kenngröße unter Verwendung des weiteren Datensatzes bestimmt wird.

In dieser Ausgestaltung werden die ersten 3D-Daten und/oder die weiteren 3D-Daten sehr vorteilhaft verwendet, um entlang der tatsächlichen Bearbeitungsspuren weitere Messdaten in 2D und/oder 3D zu erfassen. Insbesondere kann in dieser Ausgestaltung das Tiefenprofil einer oder mehrerer tatsächlicher Bearbeitungsspuren sehr genau gemessen werden. Die zuvor anhand des ersten 3D-Datensatzes identifizierten Bearbeitungsspuren können somit sehr vorteilhaft zur Bahnsteuerung eines Punktsensors für eine Profilmessung verwendet werden. Die Ausgestaltung ermöglicht die Bestimmung von nicht-planaren und/oder nicht-achsparallelen Schnitten der Werkstückoberfläche auf sehr effiziente Weise. Alternativ oder ergänzend hierzu könnten Tiefenprofile der Bearbeitungsspuren in weiteren Ausführungsbeispielen anhand des ersten 3D-Datensatzes rein rechnerisch bestimmt werden. Die bevorzugte Ausgestaltung ermöglicht die Bestimmung von Tiefenprofilen mit einer sehr hohen Auflösung und Genauigkeit. Vorteilhaft wird eine Tiefendifferenz zwischen benachbarten und/oder gekreuzten Bearbeitungsspuren als weitere Kenngröße aus den so erhaltenen Tiefenprofilen bestimmt.

In einer weiteren Ausgestaltung werden der erste 3D-Datensatz und der weitere Datensatz mit zwei typverschiedenen Messköpfen erfasst.

Diese Ausgestaltung ermöglicht eine sehr schnelle und effiziente Bestimmung der Oberflächeneigenschaften, indem für die Erfassung des ersten 3D-Datensatzes ein flächig erfassender 3D-Messkopf sehr vorteilhaft verwendet werden kann, während für die Erfassung des weiteren Datensatzes ein Punktsensor vorteilhaft verwendet werden kann. Die Ausgestaltung ermöglicht eine optimale Kombination von Messköpfen, um eine schnelle und genaue Messung zu erreichen.

In einer weiteren Ausgestaltung wird der erste 3D-Datensatz mit einer höheren Messgeschwindigkeit (Vorschubgeschwindigkeit) erfasst als der weitere Datensatz.

Auch diese Ausgestaltung trägt zu einer sehr effizienten Erfassung der Messdaten bei, weil er die Erfassung vieler Messwerte in der Fläche beschleunigt, ohne dass sich dies nachteilig auf die Genauigkeit und Auflösung bei der Bestimmung der Tiefenprofile auswirkt.

In einer weiteren Ausgestaltung wird der weitere Datensatz mit einer höheren Messauflösung erfasst als der erste 3D-Datensatz.

In dieser Ausgestaltung wird der weitere Datensatz mit einer höheren Punktdichte erfasst als der als erste 3D-Datensatz im ersten Messdurchgang. Auch diese Ausgestaltung trägt sehr vorteilhaft zu einer effizienten Erfassung der Messdaten bei, weil er eine schnelle Erfassung vieler Messwerte in der Fläche ermöglicht, ohne dass sich dies nachteilig auf die Genauigkeit und Auflösung bei der Bestimmung der Tiefenprofile auswirkt.

In einer weiteren Ausgestaltung wird der weitere Datensatz mit einem Punktsensor erfasst.

In einigen vorteilhaften Ausführungsbeispielen ist der Punktsensor ein konfokaler Abstandssensor, insbesondere ein chromatisch konfokaler Abstandssensor wie er beispielsweise von der Anmelderin unter der Bezeichnung Zeiss DotScan angeboten und vertrieben wird. Alternativ könnte der weitere Datensatz mit einem Weißlichtinterferometer erfasst werden. Ein solcher Sensor ermöglicht eine sehr genaue Messung von Mikrostrukturen an einer Werkstückoberfläche mit einer hohen Auflösung. In einigen Ausführungsbeispielen wird auch der erste 3D-Datensatz mit einem solchen Punktsensor erfasst, indem der Punktsensor rasterartig entlang von parallelen und gekreuzten Bahnen und/oder mäanderförmig relativ zu der Werkstückoberfläche bewegt wird.

In einer weiteren Ausgestaltung wird der erste 3D-Datensatz hingegen mit einem Liniensensor und/oder einem Flächensensor erfasst.

In einigen vorteilhaften Ausführungsbeispielen ist der Liniensensor ein Laserlinienscanner, wie er beispielsweise von der Anmelderin unter der Bezeichnung Zeiss LineScan angeboten und vertrieben wird. Der Liniensensor wird in einigen Ausführungsbeispielen vorteilhaft entlang einer definierten Messbahn relativ zu der Werkstückoberfläche bewegt, um den ersten 3D-Datensatz zu erfassen. In anderen vorteilhaften Ausführungsbeispielen kann der erste 3D-Datensatz mit einem Flächensensor erfasst werden, der eine Kamera mit einem Flächensensor (Pixelmatrix in CMOS oder CCD-Technologie) und einer Bildauswertung unter Verwendung von Fokusvariation beinhaltet. Diese Sensoren ermöglichen eine sehr schnelle Messwerterfassung in der Fläche und tragen daher vorteilhaft zu einer sehr schnellen und effizienten Analyse der Werkstückoberfläche bei.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Ausführungsbeispiel der neuen Vorrichtung in einer schematischen Darstellung,
- Fig. 2: eine schematische Darstellung eines Oberflächenabschnitts einer Werkstückoberfläche mit einer Vielzahl von gekreuzten Bearbeitungsspuren und einer symbolisch eingepassten Modellspur,
- Fig. 3: eine Schar mit drei gleichen Modellspuren,
- Fig. 4: eine Rotationsfläche als vereinfachtes und hier beispielhaft dargestelltes 3D-Modell eines Bearbeitungswerkzeugs, und
- Fig. 5: ein Flussdiagramm zur Erläuterung von Ausführungsbeispielen des neuen Verfahrens.

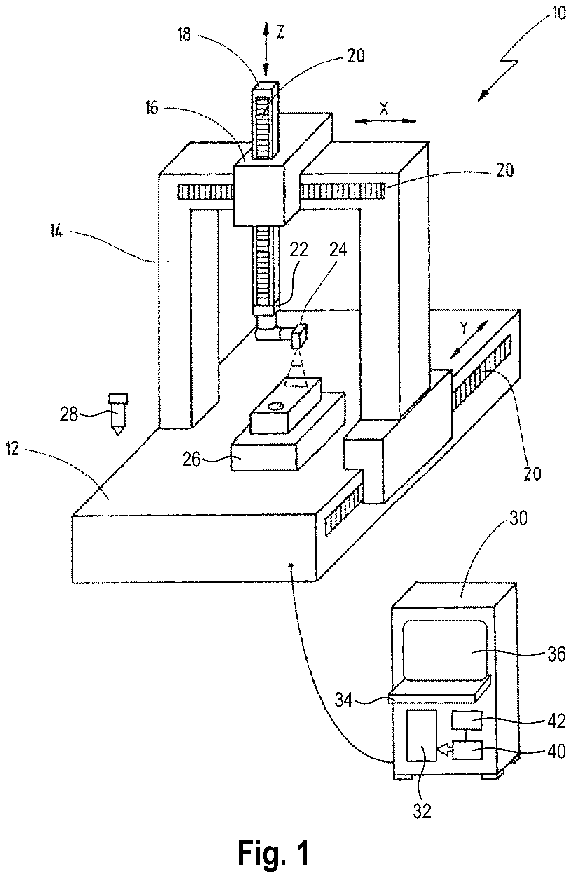

In Fig. 1 ist ein Ausführungsbeispiel der neuen Vorrichtung in seiner Gesamtheit mit der Bezugsziffer 10 bezeichnet. Die Vorrichtung 10 beinhaltet hier ein Koordinatenmessgerät mit einer Basis 12, auf der ein Portal 14 in Y-Richtung bewegbar angeordnet ist. Das Portal 14 trägt einen Schlitten 16, der hier in X-Richtung bewegbar gelagert ist. Der Schlitten 16 trägt eine Pinole 18, die hier in Z-Richtung bewegbar gelagert ist. Mit dem Bezugszeichen 20 sind Linearmaßstäbe bezeichnet, die entlang der drei Bewegungsachsen X, Y, Z angeordnet sind, so dass mithilfe geeigneter Sensoren (hier nicht dargestellt) die jeweilige Position des Portals 14, Schlittens 16 und der Pinole 18 entlang der Achsen X, Y, Z bestimmt werden kann.

Das Koordinatenmessgerät ist ein Ausführungsbeispiel mit drei orthogonal zueinander angeordneten Linearachsen. In anderen Ausführungsbeispielen kann die Vorrichtung ein Horizontalarm-Koordinatenmessgerät, ein Koordinatenmessgerät in Auslegerbauweise, ein Koordinatenmessgerät in Brückenbauweise mit feststehenden Säulen, ein Koordinatenmessgerät mit einem beweglichen Werkstücktisch und/oder ein mehrachsiger Roboter sein, an dem ein Messkopf zum Erfassen der Messdaten angeordnet ist. Allgemein können Ausführungsbeispiele der neuen Vorrichtung jeden kinematischen Aufbau besitzen, der es möglich macht, einen Messkopf relativ zu einem Messobjekt zu bewegen. Dies beinhaltet Koordinatenmessgeräte, bei denen ein Messobjekt auf einem Drehtisch oder in einer anderweitig beweglichen Messobjektaufnahme beweglich gehalten ist.

Am unteren freien Ende der Pinole 18 ist hier eine Wechselschnittstelle 22 angeordnet, an der hier ein mehrachsiges Drehgelenk befestigt ist. Das Drehgelenk trägt hier einen Messkopf 24, der entlang der Linearachsen X, Y, Z relativ zu einem Werkstück 26 bewegbar ist. In Fig. 1 ist beispielhaft dargestellt, wie eine Werkstückoberfläche des Werkstücks 26 mithilfe des Messkopfes 24 gemessen wird. Bei der Bezugsziffer 28 ist ein weiterer Messkopf dargestellt, der beispielsweise in einem Werkzeugmagazin (hier nicht dargestellt) der Vorrichtung 10 gehalten sein kann. In einigen vorteilhaften Ausführungsbeispielen beinhaltet der Messkopf 24 einen Liniensensor, wie insbesondere einen Laserliniensensor, und der Messkopf 28 beinhaltet einen Punktsensor, insbesondere einen chromatisch konfokalen Abstandssensor.

Mit der Bezugsziffer 30 ist eine Auswerte- und Steuereinheit bezeichnet. Die Auswerte- und Steuereinheit 30 beinhaltet eine KMG-Steuerung 32, die die Antriebe des Koordinatenmessgerätes 10 (hier nicht gesondert dargestellt) in Abhängigkeit von Steuerdaten ansteuert und dementsprechend für eine Bewegung des Messkopfes 24 relativ zu dem Messobjekt 26 entlang der Linearachsen und Drehachsen sorgt.

Die Auswerte- und Steuereinheit 30 beinhaltet ferner ein Bedienterminal 34 mit einem Monitor 36 und einer Tastatur 38. Das Bedienterminal 34 ist in typischen Ausführungsbeispielen mithilfe eines handelsüblichen Personal-Computers realisiert, der mit einem Betriebssystem wie Windows^{®}, Linux oder MacOS betrieben werden kann und auf dem eine Software ausgeführt wird, die es einerseits möglich macht, Steuerdaten für die Maschinensteuerung 32 zu erzeugen und die andererseits zur Auswertung der erhaltenen Messergebnisse dient. Beispielhaft sei auf die Mess- und Auswertesoftware CALYPSOO verwiesen, die von der Anmelderin kommerziell angeboten wird.

Das Bedienterminal 34 besitzt in an sich bekannter Weise einen Prozessor 40, auf dem die Mess- und Auswertesoftware in einem Ausführungsbeispiel des neuen Verfahrens ausgeführt wird. Das Bedienterminal 34 besitzt ferner einen Speicher 42, in dem hier unter anderem die Mess- und Auswertesoftware, mit den Messköpfen 24, 28 erfasste Messdatensätze und darüber hinaus ein Parameterdatensatz gespeichert sind oder gespeichert werden können. Der Parameterdatensatz beinhaltet in bevorzugten Ausführungsbeispielen Parameterdaten, die eine erwartete Bearbeitungsspur auf der Werkstückoberfläche des Werkstücks 26, mithin eine Modellspur, repräsentieren.

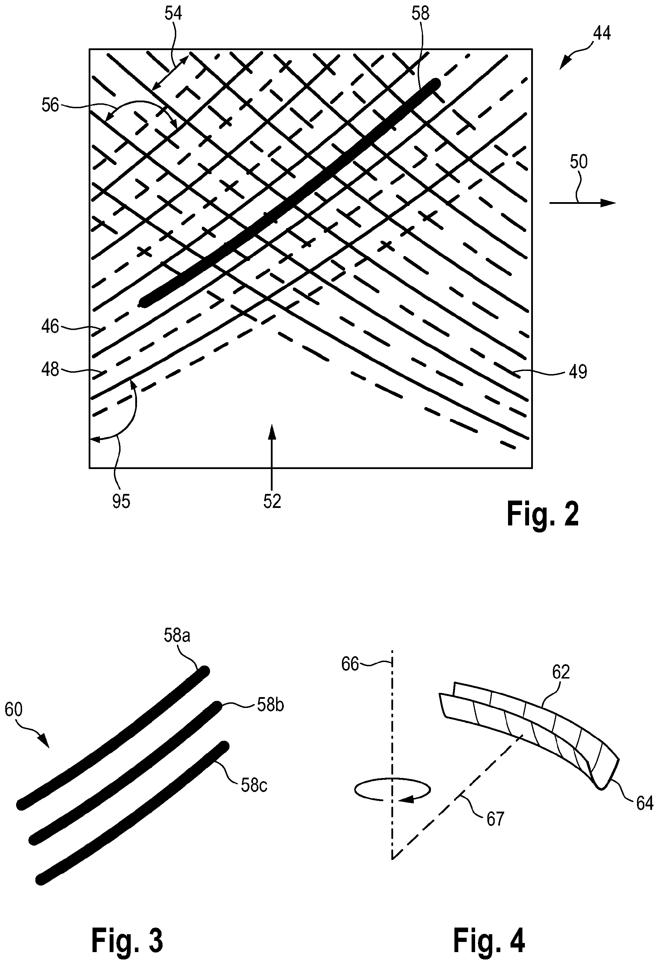

Fig. 2 zeigt eine schematische Darstellung eines Oberflächenabschnitts 44 des Werkstücks 26 mit einer Vielzahl von Bearbeitungsspuren 46, 48. Die Bearbeitungsspuren 46, 48 sind hier die Folge einer gezielten spanenden Bearbeitung der Werkstückoberfläche mit einem Stirnfräser (nicht dargestellt), der in einer ersten Vorschubrichtung 50 über die Werkstückoberfläche geführt wurde. Die Bearbeitung kann alternativ oder ergänzend in einer weiteren Vorschubrichtung 52 erfolgen. Dargestellt ist hier das Resultat eines Bearbeitungsvorgangs. Das Fräswerkzeug hat bei der Bearbeitung der Werkstückoberfläche Riefen erzeugt, die sich als weitgehend kreisbogenförmige, insbesondere zykloide Einschnitte oder Gräben an der Oberfläche zeigen. Die Riefen sind hier für die Vorschubrichtung 50 dargestellt. Die Mittelpunktbahn des Fräswerkzeugs, d.h. die Bahn der Rotationsachse des Fräswerkzeugs liegt hier beispielhaft oberhalb des Oberflächenabschnitts 44. Die gestrichelten Linien 46, 48 stellen Riefen dar, die beim Eintritt des Fräswerkzeugs in den Oberflächenabschnitt 44 erzeugt wurden. Die Rotationsachse des Fräswerkzeugs bei der Erzeugung der Riefen 46 liegt "oben links" von dem Oberflächenabschnitt 44. Die gestrichelten Linien 49 stellen Riefen dar, die beim Austritt des Fräswerkzeugs aus dem Oberflächenabschnitt 44 erzeugt wurden. Die Rotationsachse des Fräswerkzeugs bei Erstellung der Riefen 49 liegt oben rechts von dem Oberflächenabschnitt 44. Das neue Verfahren ist auch auf Oberflächen mit drei "Hauptrichtungen" anwendbar. Hierbei können zwei Hauptrichtungen, wie hier erläutert, in einem einzigen Bearbeitungsvorgang erzeugt werden. Die dritte Hauptrichtung kann beispielsweise erzeugt werden, indem das Fräswerkzeug in einem weiteren Bearbeitungsvorgang entlang einer weiteren Vorschubrichtung 52 geführt wird.

Die Riefen 46, 48, 49 sind somit die Bearbeitungsspuren. Zwischen jeweils benachbarten Riefen/Bearbeitungsspuren sind jeweils annähernd kreisbogenförmige "Höhenzüge" verblieben. Insgesamt besitzt die Werkstückoberfläche in diesem Ausführungsbeispiel daher eine waffeleisenartige Mikrostrukturierung, wie sie beispielsweise an Flanschflächen für Antriebsstrangkomponenten bei Kraftfahrzeugen wünschenswert ist. Da die Mikrostrukturierung hier eine technische Funktion hat, ist es wünschenswert, Kenngrößen zu bestimmen, mit denen die Eigenschaften der erzeugten Mikrostrukturierung im Rahmen einer Qualitätskontrolle geprüft werden können. Beispielsweise sind die Abstände 54 zwischen benachbarten Bearbeitungsspuren und die Winkel 56 zwischen sich kreuzenden Bearbeitungsspuren (hier aus Gründen der Übersichtlichkeit jeweils am Beispiel zweier "Höhenzüge" dargestellt) Kenngrößen, die die Mikrostrukturierung charakterisieren.

Bei der Bezugsziffer 58 ist hier symbolisch eine Modellspur dargestellt, die im Rahmen der Auswertung in die erfassten 3D-Messdaten von dem Oberflächenabschnitt 44 mit einem Fitting-Verfahren so eingepasst wird, dass sie einer der realen Bearbeitungsspuren, hier der Bearbeitungsspur 46 angenähert ist.

In Fig. 3 ist eine Schar 60 mit 3 gleichen Modellspuren 58a, 58b, 58c dargestellt. Die Modellspuren 58a, 58b, 58c sind hier mit jeweiligen Abständen zueinander in einer Hauptrichtung gestaffelt. In einigen Ausführungsbeispielen kann eine solche Schar 60 von Modellspuren in den erfassten 3D-Datensatz von der Werkstückoberfläche eingepasst werden. Es versteht sich, dass die Anzahl der Modellspuren in einer solchen Schar größer oder kleiner sein kann als in Fig. 3 dargestellt ist. Des Weiteren werden die Fachleute erkennen, dass die Abstände zwischen den Modellspuren 58a, 58b, 58c einer Schar den erwarteten Abständen der realen Bearbeitungsspuren 46 einer Haupt- bzw. Strukturrichtung entsprechen sollten, um eine effiziente Einpassung der Schar 60 in den 3D-Datensatz zu ermöglichen. In anderen Ausführungsbeispielen kann eine einzelne Modellspur 58 sequentiell an verschiedenen Positionen entlang der angenommenen Haupt- bzw. Strukturrichtung in den 3D-Datensatz eingepasst werden, um auf diese Weise sequentiell mehrere Bearbeitungsspuren 46, 48 zu bestimmen.

Fig. 4 zeigt eine Rotationsfläche 62, die durch Rotation einer Parabel 64 um eine Rotationsachse 66 mit dem Radius bzw. im Abstand 67 entsteht. Die Parabel 62 nähert hier die Schneidkante einer Fräswerkzeugs, insbesondere die Schneidkante einer Wendeschneidplatte an einem Fräskopf (hier nicht dargestellt) an. Der Radius 67 kann mit dem Wissen über den Abstand der realen Schneidkante von der Drehachse des realen Fräskopfes vorteilhaft als einstellbarer Parameter vorgegeben werden. In besonders bevorzugten Ausführungsbeispielen kann die Form und die Größe der Schnittkante bei der Parametrierung der Rotationsfläche 62 und der Einpassung in den 3D-Datensatz berücksichtigt werden, um die Bearbeitungsspuren 46, 48 in dem 3D-Datensatz zu identifizieren.

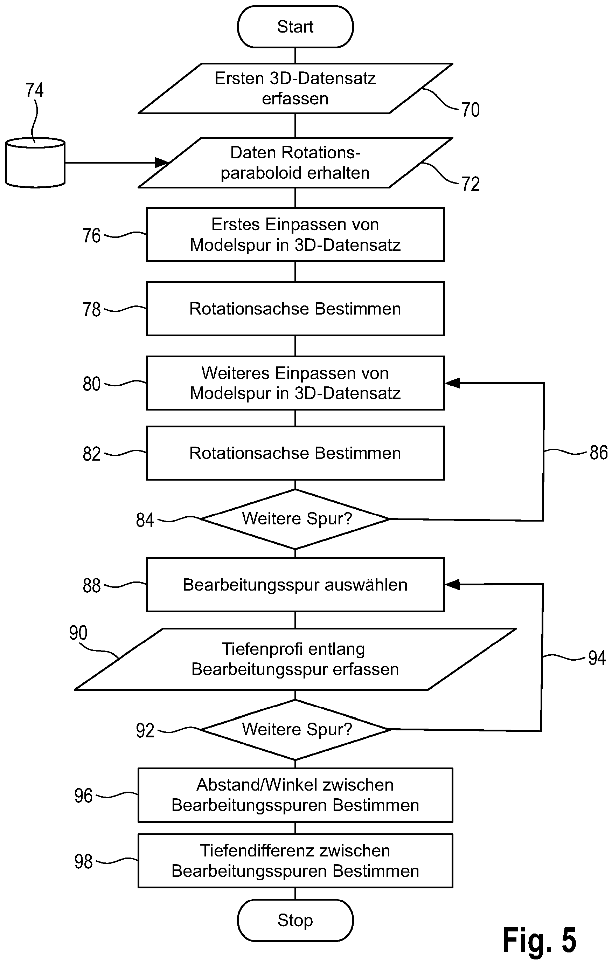

Fig. 5 zeigt ein Flussdiagramm zur Erläuterung von Ausführungsbeispielen des neuen Verfahrens. Gemäß Schritt 70 wird zunächst ein (erster) 3D-Datensatz von der Werkstückoberfläche in Form einer Punktewolke erfasst. Dies kann vorteilhaft mit Hilfe des Linienscanners 24 erfolgen. Der erfasste 3D-Datensatz enthält 3D-Messdaten, die die Werkstückoberfläche mit einer Messgenauigkeit und einer Messauflösung repräsentieren, die der Messkopf 24 zusammen mit der Kinematik, mit der Messkopf 24 relativ zu der Werkstückoberfläche bewegt wird, liefert. Gemäß Schritt 72 wird in diesem Ausführungsbeispiel ein Parameterdatensatz 74, der einen Rotationsparaboloiden gemäß Fig. 4 repräsentiert, aus einem Speicher gelesen. Der Speicher kann in dem Speicher 42 der Auswerte- und Steuereinheit 30 enthalten sein. Alternativ oder ergänzend kann der Parameterdatensatz 74 über einen externen Speicher in die Auswerte- und Steuereinheit 30 importiert werden. Wie zuvor bereits angedeutet, modelliert der Parameterdatensatz 74 hier das Bearbeitungswerkzeug, mit dem die Werkstückoberfläche bearbeitet worden ist. Dementsprechend beinhaltet der Parameterdatensatz 74 eine Modellspur 58. In anderen Ausführungsbeispielen kann ein Parameterdatensatz 74 erhalten werden, der eine 2D-Modellspur 58 oder eine Schar 60 von Modellspuren repräsentiert.

Gemäß Schritt 76 wird die Modellspur, sei sie in Form der Rotationsfläche gemäß Fig. 4, eine 2D-Modellspur gemäß Fig. 2 oder eine Schar gemäß Fig. 3, in den erfassten 3D-Datensatz eingepasst, um eine erste reale Bearbeitungsspur 46 an der Werkstückoberfläche zu bestimmen. In dem hier dargestellten Ausführungsbeispiel wird gemäß Schritt 78 ferner die Rotationsachse 66 des Modellwerkzeugs bestimmt, d.h. es wird bestimmt, wo der (vermutete) Rotationsmittelpunkt des Bearbeitungswerkzeugs zu dem Zeitpunkt, zu dem die identifizierte Bearbeitungsspur 46 erzeugt wurde, relativ zu den 3D-Daten der Bearbeitungsspur war. In anderen Ausführungsbeispielen kann der Schritt 78 entfallen.

Gemäß Schritt 80 wird die Modellspur bzw. die Rotationsfläche relativ zu dem 3D-Datensatz verschoben, um die Modellspur bzw. die Rotationsfläche mit der Modellspur an einer anderen Stelle in den 3D-Datensatz einzupassen. Gemäß dem optionalen Schritt 82 wird anschließend die Position des Rotationsmittelpunktes des Bearbeitungswerkzeugs zu dem Zeitpunkt bestimmt, zu dem die nun identifizierte Bearbeitungsspur erzeugt wurde. Gemäß Schritt 84 erfolgt eine Entscheidung, ob weitere Bearbeitungsspuren in dem 3D-Datensatz identifiziert werden sollen. Wenn ja, kehrt das Verfahren gemäß Schleife 86 zu Schritt 80 zurück.

Wenn nein, wird in diesem Ausführungsbeispiel gemäß Schritt 88 eine der zuvor identifizierten Bearbeitungsspuren aus dem 3D-Datensatz ausgewählt, um anschließend mit dem Messkopf 28 gemäß Schritt 90 ein Tiefenprofil der ausgewählten Bearbeitungsspur als weiteren Datensatz zu erfassen. Dementsprechend werden die 3D-Daten der ausgewählten Bearbeitungsspur in diesem Ausführungsbeispiel für die Bahnsteuerung des Messkopfes 28 verwendet, mit dem das Tiefenprofil der ausgewählten Bearbeitungsspur erfasst wird. In bevorzugten Ausführungsbeispielen wird der weitere Datensatz mit einer geringeren Messgeschwindigkeit und/oder mit einer höheren Messauflösung erfasst als der erste 3D-Datensatz.

Gemäß Schritt 92 erfolgt eine Entscheidung, ob weitere Tiefenprofile zu weiteren Bearbeitungsspuren bestimmt werden sollen. Wenn ja, kehrt das Verfahren hier gemäß Schleife 94 zu Schritt 88 zurück. Wenn nein, werden gemäß den Schritten 96, 98 Kenngrößen bestimmt, die für das Verhältnis der ausgewählten Bearbeitungsspuren repräsentativ sind. Insbesondere können also Abstände 54 zwischen ausgewählten Bearbeitungsspuren und/oder Winkel 56 zwischen ausgewählten Bearbeitungsspuren und/oder ein (Struktur-)winkel 95 zwischen einem definierten Koordinatensystem und den Bearbeitungsspuren anhand der 3D-Daten aus dem ersten 3D-Datensatz bestimmt werden. Das Koordinatensystem kann, wie in Fig. 2 angedeutet, in einigen Ausführungsbeispielen an den orthogonalen Achsen eines gewählten Bildausschnitts angepasst sein.

In vorteilhaften Ausführungsbeispielen werden zudem Tiefendifferenzen zwischen ausgewählten Bearbeitungsspuren anhand der Tiefenprofile aus dem weiteren Datensatz bestimmt. Prinzipiell ist es in anderen Ausführungsbeispielen möglich, Tiefendifferenzen anhand der 3D-Daten aus dem ersten 3D-Datensatz zu bestimmen.

In weiteren Ausführungsbeispielen werden der erste 3D-Datensatz und der weitere Datensatz mit demselben Messkopf erfasst. Bevorzugt ist der Messkopf in diesen Ausführungsbeispielen ein Punktsensor 28.

Durch das integrale Einpassungsverfahren werden hier alle Datenpunkte einer Bearbeitungsspur, die in dem ersten 3D-Datensatz vorhanden ist, für die Einpassung der Modellspur genutzt. Lokale Ausreißer in der Messpunktwolke werden durch die Vielzahl der Messpunkte vorteilhaft ausgeglichen, was zu einer sehr genauen Messung führt.

Die Punktedichte in der Punktewolke des ersten 3D-Datensatzes ist vorteilhaft optimiert für die schnelle flächige und doch ausreichend genaue Erfassung lateraler Informationen (z.B. 10µm oder 20µm). Die Punktedichte der darauf aufbauenden Profilmessungen mit dem Punktsensor ist vorteilhaft optimiert für die exakte Darstellung der vertikalen (out-of-plane) Informationen der Oberfläche (0,5µm oder 1µm). Dementsprechend wird der weitere Datensatz in einigen vorteilhaften Ausführungsbeispielen mit einer Messauflösung erfasst, die um einen Faktor zwischen 10 und 50 höher ist als die Messauflösung im ersten 3D-Datensatz.

## Patentansprüche

1. Verfahren zum Bestimmen von Oberflächeneigenschaften eines Werkstücks (26) mit einer Werkstückoberfläche, die mit einem definierten Bearbeitungswerkzeug bearbeitet worden ist, wobei die Werkstückoberfläche eine Vielzahl von individuellen Bearbeitungsspuren (46, 48) aufweist, die von dem Bearbeitungswerkzeug resultieren, mit den Schritten
- Erfassen (70) eines ersten 3D-Datensatzes von einem definierten Oberflächenabschnitt (44) der Werkstückoberfläche,
- Erhalten (72) einer Modellspur (58), die eine theoretische Bearbeitungsspur des Bearbeitungswerkzeugs repräsentiert,
- Erstes Einpassen (76) der Modellspur (58) in den ersten 3D-Datensatz, so dass die Modellspur (58) ersten 3D-Daten aus dem ersten 3D-Datensatz angenähert ist, wobei die ersten 3D-Daten eine erste individuelle Bearbeitungsspur (46) aus der Vielzahl von individuellen Bearbeitungsspuren repräsentieren,
- Weiteres Einpassen (80) der Modellspur (58) in den ersten 3D-Datensatz, so dass die Modellspur (58) weiteren 3D-Daten aus dem ersten 3D-Datensatz angenähert ist, wobei die weiteren 3D-Daten eine weitere individuelle Bearbeitungsspur aus der Vielzahl von individuellen Bearbeitungsspuren repräsentieren,
- Bestimmen (96) von zumindest einer Kenngröße, die ein Verhältnis zwischen den ersten 3D-Daten und den weiteren 3D-Daten repräsentiert.

2. Verfahren nach Anspruch 1, wobei das weitere Einpassen (80) der Modellspur in den ersten 3D-Datensatz eine Vielzahl von weiteren Einpassungsschritten (86) beinhaltete, so dass die Modellspur (58) einer Vielzahl von weiteren 3D-Daten aus dem ersten 3D-Datensatz angenähert wird.

3. Verfahren nach Anspruch 1 oder 2, wobei die Modellspur (58) nach dem ersten Einpassen relativ zu den ersten 3D-Daten lateral verschoben wird, um die Modellspur (58) den weiteren 3D-Daten aus dem ersten 3D-Datensatz anzunähern.

4. Verfahren nach einem der Ansprüche 1 bis 3, wobei eine Vielzahl von Modellspuren (58a, 58b, 58c), die eine Schar (60) von gestaffelten Modellspuren bilden, in den ersten 3D-Datensatz eingepasst wird.

5. Verfahren nach einem der Ansprüche 1 bis 4, wobei die Modellspur (58) weitgehend kreisbogenförmig, insbesondere zykloid ist.

6. Verfahren nach einem der Ansprüche 1 bis 5, wobei die Modellspur (58) unter Verwendung einer Rotationsfläche (62) in den ersten 3D-Datensatz eingepasst wird.

7. Verfahren nach Anspruch 5 oder 6, wobei eine fiktive Rotationsachse (66) des Bearbeitungswerkzeugs unter Verwendung der Modellspur (58) und des ersten 3D-Datensatzes bestimmt (78, 82) wird.

8. Verfahren nach einem der Ansprüche 1 bis 7, wobei ein weiterer Datensatz entlang der ersten 3D-Daten und/oder entlang der weiteren 3D-Daten erfasst (90) wird, und wobei eine weitere Kenngröße (98) unter Verwendung des weiteren Datensatzes bestimmt wird.

9. Verfahren nach Anspruch 8, wobei der erste 3D-Datensatz und der weitere Datensatz mit zwei typverschiedenen Messköpfen (24, 28) erfasst werden.

10. Verfahren nach Anspruch 8 oder 9, wobei der erste 3D-Datensatz mit einer höheren Messgeschwindigkeit erfasst wird als der weitere Datensatz.

11. Verfahren nach einem der Ansprüche 8 bis 10, wobei der weitere Datensatz mit einer höheren Messauflösung erfasst wird als der erste 3D-Datensatz.

12. Verfahren nach einem der Ansprüche 8 bis 11, wobei der weitere Datensatz mit einem Punktsensor (28) erfasst wird.

13. Verfahren nach einem der Ansprüche 1 bis 12, wobei der erste 3D-Datensatz mit einem Liniensensor (24) und/oder einem Flächensensor erfasst wird.

14. Verfahren nach einem der Ansprüche 1 bis 12, wobei der erste 3D-Datensatz mit einem Punktsensor (28) erfasst wird, der relativ zu der Werkstückoberfläche bewegt wird.

15. Vorrichtung zum Bestimmen von Oberflächeneigenschaften eines Werkstücks (26) mit einer Werkstückoberfläche, die mit einem definierten Bearbeitungswerkzeug bearbeitet worden ist, wobei die Werkstückoberfläche eine Vielzahl von individuellen Bearbeitungsspuren aufweist, die von dem Bearbeitungswerkzeug resultieren, mit einem ersten Messkopf (24), der dazu eingerichtet ist, einen ersten 3D-Datensatz von einem definierten Oberflächenabschnitt der Werkstückoberfläche zu erfassen, und mit einem Auswertegerät (30), das dazu eingerichtet ist,
- eine Modellspur (58) zu erhalten, die eine theoretische Bearbeitungsspur des Bearbeitungswerkzeugs repräsentiert,
- die Modellspur in den ersten 3D-Datensatz einzupassen (76), so dass die Modellspur (58) ersten 3D-Daten aus dem ersten 3D-Datensatz angenähert ist, wobei die ersten 3D-Daten eine erste individuelle Bearbeitungsspur (46) aus der Vielzahl von individuellen Bearbeitungsspuren repräsentieren,
- die Modellspur ein weiteres Mal in den ersten 3D-Datensatz einzupassen (80), so dass die Modellspur (58) weiteren 3D-Daten aus dem ersten 3D-Datensatz angenähert ist, wobei die weiteren 3D-Daten eine weitere individuelle Bearbeitungsspur aus der Vielzahl von individuellen Bearbeitungsspuren repräsentieren, und
- zumindest eine Kenngröße (96) zu bestimmen, die ein Verhältnis zwischen den ersten 3D-Daten und den weiteren 3D-Daten repräsentiert.

## Claims

1. Method for determining surface properties of a workpiece (26) having a workpiece surface which has been processed by a defined processing tool, wherein the workpiece surface has a plurality of individual processing tracks (46, 48) resulting from the processing tool, comprising the steps of
- capturing (70) a first 3D data set of a defined surface section (44) of the workpiece surface,
- obtaining (72) a model track (58) representing a theoretical processing track of the processing tool,
- first fitting (76) of the model track (58) into the first 3D data set, such that the model track (58) is approximated to first 3D data from the first 3D data set, wherein the first 3D data represent a first individual processing track (46) from the plurality of individual processing tracks,
- further fitting (80) of the model track (58) into the first 3D data set, such that the model track (58) is approximated to further 3D data from the first 3D data set, wherein the further 3D data represent a further individual processing track from the plurality of individual processing tracks,
- determining (96) at least one characteristic variable representing a ratio between the first 3D data and the further 3D data.

2. Method according to Claim 1, wherein the further fitting (80) of the model track into the first 3D data set included a plurality of further fitting steps (86), such that the model track (58) is approximated to a plurality of further 3D data from the first 3D data set.

3. Method according to Claim 1 or 2, wherein the model track (58) is displaced laterally
relative to the first 3D data after the first fitting in order to approximate the model track (58) to the further 3D data from the first 3D data set.

4. Method according to any of Claims 1 to 3, wherein a plurality of model tracks (58a, 58b, 58c) forming a set (60) of staggered model tracks is fitted into the first 3D data set.

5. Method according to any of Claims 1 to 4, wherein the model track (58) is substantially in the shape of a circular arc, in particular cycloidal.

6. Method according to any of Claims 1 to 5, wherein the model track (58) is fitted into the first 3D data set using a surface (62) of revolution.

7. Method according to Claim 5 or 6, wherein a fictitious axis (66) of rotation of the processing tool is determined (78, 82) using the model track (58) and the first 3D data set.

8. Method according to any of Claims 1 to 7, wherein a further data set is captured (90) along the first 3D data and/or along the further 3D data, and wherein a further characteristic variable (98) is determined using the further data set.

9. Method according to Claim 8, wherein the first 3D data set and the further data set are captured by two measuring heads (24, 28) of different types.

10. Method according to Claim 8 or 9, wherein the first 3D data set is captured at a higher measurement speed than the further data set.

11. Method according to any of Claims 8 to 10, wherein the further data set is captured with a higher measurement resolution than the first 3D data set.

12. Method according to any of Claims 8 to 11, wherein the further data set is captured by a point sensor (28).

13. Method according to any of Claims 1 to 12, wherein the first 3D data set is captured by a line sensor (24) and/or an area sensor.

14. Method according to any of Claims 1 to 12, wherein the first 3D data set is captured by a point sensor (28) that is moved relative to the workpiece surface.

15. Device for determining surface properties of a workpiece (26) having a workpiece surface which has been processed by a defined processing tool, wherein the workpiece surface has a plurality of individual processing tracks resulting from the processing tool, comprising a first measuring head (24) configured to capture a first 3D data set of a defined surface section of the workpiece surface, and comprising an evaluation unit (30) configured
- to obtain a model track (58) representing a theoretical processing track of the processing tool,
- to fit (76) the model track into the first 3D data set, such that the model track (58) is approximated to first 3D data from the first 3D data set, wherein the first 3D data represent a first individual processing track (46) from the plurality of individual processing tracks,
- to fit (80) the model track a further time into the first 3D data set, such that the model track (58) is approximated to further 3D data from the first 3D data set, wherein the further 3D data represent a further individual processing track from the plurality of individual processing tracks, and
- to determine at least one characteristic variable (96) representing a ratio between the first 3D data and the further 3D data.

## Revendications

1. Procédé de détermination de propriétés de surface d'une pièce (26) dont la surface a été traitée avec un outil de traitement défini, la surface de la pièce comportant un grand nombre de marques de traitement individuelles (46, 48) dues à l'outil de traitement, ledit procédé comportant les étapes suivantes
- acquérir (70) un premier ensemble de données 3D à partir d'une portion de surface définie (44) de la surface de la pièce,
- obtenir (72) une marque modèle (58) qui représente une marque de traite ment théorique de l'outil de traitement,
- effectuer un premier ajustement (76) de la marque modèle (58) au premier ensemble de données 3D, de sorte que la marque modèle (58) se rap proche des premières données 3D du premier ensemble de données 3D, les premières données 3D représentant une première marque de traite ment individuelle (46) parmi le grand nombre de marques de traitement in dividuelles,
- effectuer un autre ajustement (80) de la marque modèle (58) au premier ensemble de données 3D, de sorte que la marque modèle (58) se rap proche des premières données 3D du premier ensemble de données 3D, les autres données 3D représentant une autre marque de traitement indivi duelle parmi le grand nombre de marques de traitement individuelles,
- déterminer (96) au moins une grandeur caractéristique qui représente une relation entre les premières données 3D et les autres données 3D.

2. Procédé selon la revendication 1, l'autre ajustement (80) de la marque modèle au premier ensemble de données 3D comprenant un grand nombre d'étapes d'autres ajustements (86), de sorte que la marque modèle (58) soit rapprochée d'un grand nombre d'autres données 3D du premier ensemble de données 3D.

3. Procédé selon la revendication 1 ou 2, la marque modèle (58) étant décalée latéralement par rapport aux premières données 3D après le premier ajustement afin de rapprocher la marque modèle (58) des autres données 3D du premier ensemble de données 3D.

4. Procédé selon l'une des revendications 1 à 3, un grand nombre de marques modèles (58a, 58b, 58c), qui forment une famille (60) de marques modèles décalées, étant ajustées dans le premier ensemble de données 3D.

5. Procédé selon l'une des revendications 1 à 4, la marque modèle (58) étant dans une large mesure en forme d'arc de cercle, en particulier cycloïde.

6. Procédé selon l'une des revendications 1 à 5, la marque modèle (58) étant ajustée au premier ensemble de données 3D à l'aide d'une surface de révolution (62).

7. Procédé selon la revendication 5 ou 6, un axe de rotation fictif (66) de l'outil de traitement étant déterminé (78, 82) à l'aide de la marque modèle (58) et du premier ensemble de données 3D.

8. Procédé selon l'une des revendications 1 à 7, un autre ensemble de données étant acquis (90) le long des premières données 3D et/ou le long des autres données 3D, et une autre grandeur caractéristique (98) étant déterminée à l'aide de l'autre ensemble de données.

9. Procédé selon la revendication 8, le premier ensemble de données 3D et l'autre ensemble de données étant acquis à l'aide de deux têtes de mesure (24, 28) de types différents.

10. Procédé selon la revendication 8 ou 9, le premier ensemble de données 3D étant acquis à une vitesse de mesure supérieure à celle de l'autre ensemble de données.

11. Procédé selon l'une des revendications 8 à 10, l'autre ensemble de données étant acquis avec une résolution de mesure supérieure à celle du premier ensemble de données 3D.

12. Procédé selon l'une des revendications 8 à 11, l'autre ensemble de données étant acquis à l'aide d'un capteur ponctuel (28).

13. Procédé selon l'une des revendications 1 à 12, le premier ensemble de données 3D étant acquis à l'aide d'un capteur linéaire (24) et/ou un capteur surfacique.

14. Procédé selon l'une des revendications 1 à 12, le premier ensemble 3D étant acquis à l'aide d'un capteur ponctuel (28) qui est déplacé par rapport à la surface de la pièce.

15. Dispositif de détermination de propriétés de surface d'une pièce (26) pourvue d'une surface qui a été traitée à l'aide d'un outil de traitement défini, la surface de la pièce comportant un grand nombre de marques de traitement individuelles dues à l'outil de traitement, ledit dispositif comprenant une première tête de mesure (24) qui est conçue pour acquérir un premier ensemble de données 3D à partir d'une portion de surface définie de la surface de la pièce, et une unité d'évaluation (30) qui est conçue pour
- obtenir une marque modèle (58) qui représente une marque de traitement théorique de l'outil de traitement,
- ajuster la marque modèle au premier ensemble de données 3D (76), de sorte que la marque modèle (58) se rapproche des premières données 3D du premier ensemble de données 3D, les premières données 3D représen tant une première marque de traitement individuelle (46) parmi le grand nombre de marques de traitement individuelles,
- ajuster à nouveau (80) la marque modèle au premier ensemble de don nées 3D, de sorte que la marque modèle (58) se rapproche d'autres don nées 3D du premier ensemble de données 3D, les autres données 3D re présentant une autre marque de traitement individuelle parmi le grand nombre de marques de traitement individuelles, et
- déterminer au moins une grandeur caractéristique (96) qui représente une relation entre les premières données 3D et les autres données 3D.
